# EUROPEAN PATENT SPECIFICATION

(11) **EP 2 788 654 B1**
(45) Date of publication and mention of the grant of the patent: **10.06.2020**
(21) Application number: 11794453.8
(22) Date of filing: 05.12.2011
(51) Int. Cl.: F17C 1/00

(54) **PRESSURE VESSEL WITH METALLIC LINER AND TWO FIBER LAYERS OF DIFFERENT MATERIAL**
DRUCKBEHÄLTER MIT METALLISCHEM INNENFUTTER UND ZWEI FASERSCHICHTEN AUS UNTERSCHIEDLICHEM MATERIAL
CUVE SOUS PRESSION À REVÊTEMENT MÉTALLIQUE ET COMPRENANT DEUX COUCHES DE FIBRES EN MATÉRIAU DIFFÉRENT

(43) Date of publication of application: 15.10.2014
(73) Proprietor: Blue Wave Co S.A., 1643 Luxembourg (LU)
(72) Inventor: NETTIS, Francesco, London SW1X 8HN (GB); REDONDI, Paolo, 24020 Gorle (BG) (IT); TOMASELLI, Vanni Neri, L-1130 Luxembourg (LU)
(74) Representative: CSY Herts
(86) International application number: PCT/EP2011/071794
(87) International publication number: WO 2013/083158

(56) References cited:
- US-A- 4 835 975
- US-A1- 2004 040 969
- US-A1- 2005 260 373
- US-A1- 2009 236 349
- US-A1- 2010 276 434

## Description

### Field of the invention

The present invention relates to a pressure vessel for containing or transporting pressurized gas. More particularly it relates to such vessels for containing or transporting compressed natural gas (CNG).

The present invention also relates to a method of storing or transporting gas onshore or offshore. Moreover, the present invention relates to a vehicle for transporting gas, in particular compressed natural gas.

### Background art

Conventional pressure vessels for containing or transporting pressurized gas are typically made on the basis of stainless steel and are heavy in weight. US2005260373 A1 discloses such a pressure vessel. However, the cost of stainless steel is considerable, whereby despite its corrosion resistant properties, it presents difficulties on seafaring vehicles - seafaring vessels have a load-bearing limit based upon the buoyancy of the vehicle, much of which load capacity is taken up by the physical weight of the vessels - i.e. their "empty" weight.

Moreover, on seafaring vehicles, inevitable salt water spray creates an undesired and prolonged galvanic coupling between the stainless steel in the pressure vessel and the carbon steel used for the ship structure. This coupling leads to the so-called marine 25 corrosion, which over time deteriorates the metal with the higher difference in, or stronger, electronegativity.

### Technical problem to be solved

The present invention therefore aims at overcoming or alleviating at least one of the disadvantages of the known pressure vessels.

In particular, an object of the present invention is to provide pressure vessels, which are more resistant to the conditions onboard seafaring vehicles.

### Summary of the invention

In a first aspect of the present invention a pressure vessel is proposed, in particular for compressed natural gas containment or transport. The pressure vessel has a generally cylindrical shape over a majority of its length and at least one opening for gas loading and offloading and for liquid evacuation. The pressure vessel comprises a metallic liner, a first fiber layer external and adjacent to the metallic liner, and a second fiber layer external and adjacent to the first fiber layer. The first and second fiber layers are made of different materials.

The opening is at the bottom of the vessel. The vessel is standing vertically in use, such that the cylindrical section thereof is substantially vertical.

The metallic liner may be gas impermeable and/or corrosion resistant.
The metallic liner may be selected from the group comprising steel, stainless steel, nickel-based alloys, bi-phase steel, aluminum, aluminum alloys, titanium, and titanium alloys.
Either or both of the fiber layers may be made of fibers wound about the metallic liner. The first fiber layer may comprise carbon fibers.

The second fiber layer may comprise glass fibers.
The pressure vessel may be of essentially cylindrical shape, inside and outside, along that majority of its length.

The inner diameter of the pressure vessel may be between 0.5 meters and 5 meters. The inner diameter of the pressure vessel may be between 1 .5 meters and 3.5 meters.

The pressure vessel further comprises a manhole for entering and/or inspecting the interior of the vessel. The manhole is at the top of the vessel. The manhole may be a 24 inch (60cm) manhole, or equivalent, for allowing internal inspection, e.g. by a person climbing into the vessel. The manhole has closing means for allowing sealed closing of the opening thereof. A plurality of the inspectable pressure vessels (10) can be arranged in a module or compartment, and the pressure vessels can be interconnected for loading and offloading operations.

Preferably the vessels all have the same height. Some may have different heights, however, to accommodate a variable floor condition - such as the curvature of a hull of a ship.

According to a second aspect of the invention there is provided a method of storing or transporting gas onshore or offshore, in particular compressed natural gas, using at least one pressure vessel as described above.

A third aspect of the present invention proposes a vehicle for transporting gas, in particular compressed natural gas, comprising at least one vessel as described above. The gas transporting vehicle may be a ship or some other form of transporter, such as a truck or a train.

In the gas transporting vehicle, the pressure vessels may be interconnected. Advantages of the invention

The pressure vessel according to the present invention may allow a reduction in the unit cost in production, compared to equivalent steel vessels. A pressure vessel according to the present invention may also allow a reduction in the galvanic coupling between the vessels and a seafaring vehicle transporting them as compared to steel vessels.

A further advantage of the present invention may be a reduction in the weight of the pressure vessel compared to equivalent steel vessels - a reduced weight allows a greater volume of fluid to be carried by a ship since ships have a given buoyancy for a given displacement.

### Brief description of the drawings

These and other features of the present invention will now be described, purely by way of example, with reference to the accompanying drawings, in which:

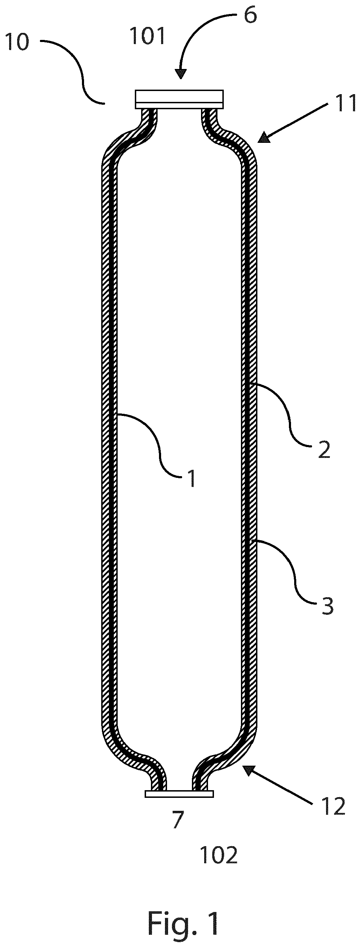

Fig 1 is a schematic cross section of an embodiment of a pressure vessel in accordance with the present invention ;
Fig 2. is a schematic perspective view showing interconnecting piping between vessels according to the invention, arranged in a module; Fig. 3 is a schematic side view showing the interconnecting piping between vessels lined up within a module;
Fig. 4 is a schematic top view showing the interconnecting piping between vessels lined up within a module;

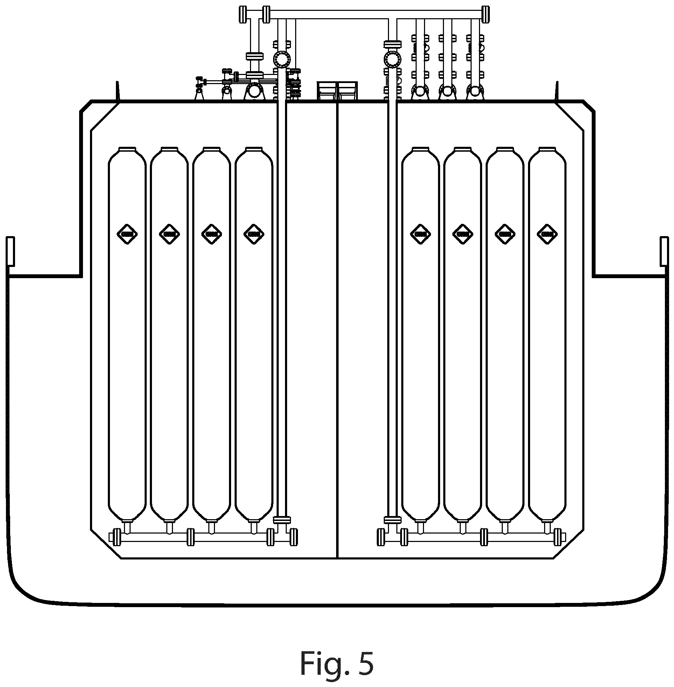

Figure 5 schematically shows a section through a ship hull showing two modules arranged side by side; and

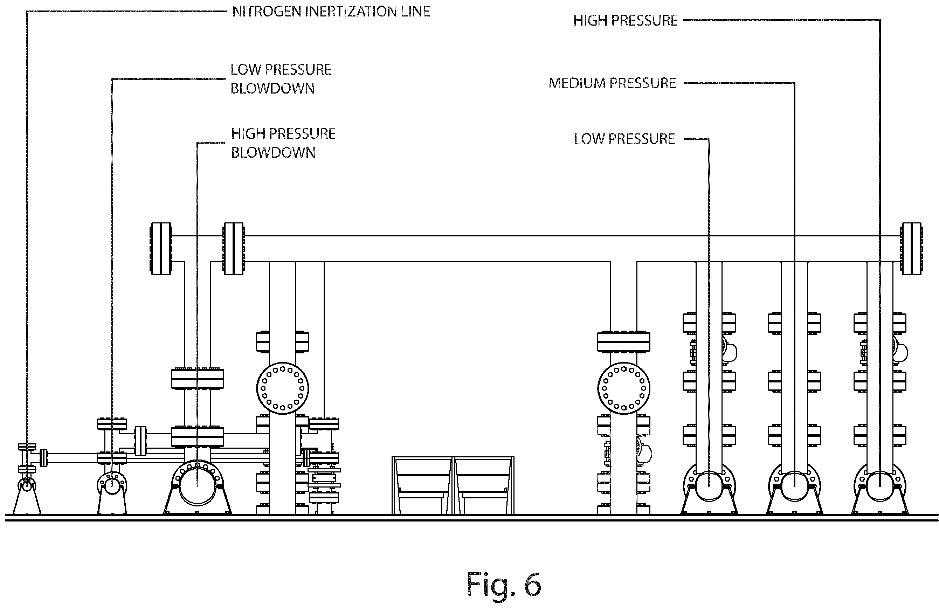

Figure 6 schematically shows a more detailed view of the top-side pipework.

### Detailed description of the invention

Increased capacity and efficiency requests in the field of CNG transportation, and the common use of steel-based cylinders therefor, has led to the development of steel-based cylinders with a thicker structure, which usually results in a heavy device or a device with a lower mass ratio of transported gas to containment system. This effect can be overcome with the use of advanced and lighter materials such as composite structures. Some existing solutions therefore already use composite structures in order to reduce the weight of the device, but the size and configuration of the composite structures are not optimized, for example due to the limitations of the materials used. For example, the use of small cylinders or non-traditional shapes of vessel often leads to a lower efficiency in terms of transported gas (smaller vessels can lead to higher non-occupied space ratios) and a more difficult inspection of the inside of the vessels.

Further, the use of partial wrapping (e.g. hoop-wrapped cylinders) for covering only the cylindrical part of the vessel, but not the ends of it, leads to an interface existing between the wrapped portion of the vessel and the end of the vessel where only the metal shell is exposed. That too can lead to problems, such as corrosion.

Also, transitions between materials in a continuous structural part usually constitute weaker areas, and hence the points in which failures are more likely to occur. The vessels mentioned in this patent are made of an internal metal liner 1 capable of hydraulic or fluidic containment of raw gases. The metal liner 1 is not needed to be provided in a form to provide a structural aim, during CNG transportation, loading and offloading phases. The metallic liner 1 should be corrosion-proof and capable of carrying non-treated or unprocessed gas, hence the used material should be stainless steel, aluminum or other corrosion-proof metallic alloy.

In case of stainless steel, it is preferred but not limited to the use of an austenitic stainless steel such as AISI 304, 314, 316 or 316L (with low carbon percentages).

In case of other metallic alloys, it is recommended but not limited to the use of a Nickel-based alloy or an aluminum-based alloy capable of corrosion resistance. This construction also allows the vessel to be able to carry other gases, such as natural gas (methane) with C02 allowances of up to 14% molar, and/or H2S allowances of up to 1 .5% molar, and also such as H2 and/or C02 gases. The preferred use, however, is CNG transportation. CNG can include various potential component parts in a variable mixture of ratios, some in their gas phase and others in a liquid phase, or a mix of both. Those component parts will typically comprise one or more of the following compounds: C2H6, C3H8, C4H10, C5H12, C6H14, C7H16, C8H18, C9+ hydrocarbons, C02 and H2S, plus potentially toluene, diesel and octane in a liquid state.

The liner 1 preferably only needs to be strong enough to withstand the stresses arising from manufacturing processes of the vessel, such as those imposed thereon during fiber winding. The structural support during pressurized transportation of gas will instead be provided by the external composite layer(s) 2, 3.

The first fiber layer 2 about the liner 1 , according to the illustrated embodiment, is a fiber-reinforced polymer based on carbon/graphite. It substantially is fully wrapping the vessel (including most of the vessel ends) and it is arranged to be providing the structural contribution during service. Is it preferred but not limited to the use of a carbon yarn, preferably with a tensile strength of 3,200 MPa or higher and/or a preferred Young Modulus of 230 GPa or higher. Advantageously it can have 12,000, 24,000 or 48,000 filaments per yarn.

The second fiber layer 3, according to the illustrated embodiment, has an isolating and protective function. In use it will be in direct contact with the external environment. For these mentioned reasons, the second external fiber layer 3 is a polymer or a fiber-reinforced polymer based on glass fibers, due to its inert behavior in aggressive and marine environments, and due to its isolating properties in terms of low thermal conductivity. Is it preferred but not limited to the use of an E-glass or S-glass fiber. Preferably the fibers have a suggested tensile strength of 1 ,000 MPa or higher and/or a suggested Young Modulus of 70 GPa or higher.

The composite matrix, regardless of the composite layer considered, is preferred to be a polymeric resin thermoset or thermoplastic. More precisely, if a thermoset, it could be and epoxy-based resin, or alternatively a vinylester or polyester-based resin. This allows a cost reduction compared to other possible arrangements, including the traditional steel arrangement. The manufacturing of the external composite layer 2, 3 over the said metallic liner 1 preferably involves a winding technology. This can potentially gives a high efficiency in terms of production hours. Moreover it can potentially provide good precision in the fibers' orientation. Further it can provide good quality reproducibility.

The reinforcing fibers preferably are wound with a back-tension over a mandrel. The mandrel is typically the liner. The liner thus constitutes the male mould for this technology. The winding is typically after the fibers have been pre-impregnated in the resin. Impregnated fibers are thus preferably deposited in layers over said metallic liner until the desired thickness is reached for the given diameter. For example, for a diameter of 6m, the desired thickness might be about 350 mm for carbon-based composites or about 650 mm for glass- based composites.

Since this invention relates to a substantially fully-wrapped pressure vessel 10, a multi-axis crosshead for fibers is preferably used in the manufacturing process.

The process preferably includes a covering of at least most of the ends 1 1 , 12 of the pressure vessel 10 with the structural external composite layer 2, 3. In the case of the use of thermoset resins there can be a use of an impregnating basket before the fiber deposition - for impregnating the fibers before actually winding the fibers around the metal liner 1 .

In the case of the use of thermoplastic resins, there can be a heating of the resin before the fiber deposition in order to melt the resin just before reaching the mandrel, or the fibers are impregnated with thermoplastic resin before they are deposited as a composite material on the metal liner. The resin is again heated before depositing the fibers in order to melt the resin just before the fiber and resin composite reaches the metal liner.

The pressure vessel 10 has an opening 7 (here provided with a cap or connector) addressed to gas loading and offloading and for liquid evacuation. It is at a bottom end 12 thereof and it can be a 12-inch (30cm) opening for connecting to pipework. The vessel 10 also has an opening 6 at the top end 1 1 . It is shown to be in the form of an 18 inch (45cm) wide or above access manhole, such as one with a sealed or sealable cover (or more preferably a 24 inch (60cm) manhole). It is preferably provided according to ASME (American Society of Mechanical Engineers) standards. The opening is provided with closing means, allowing sealed closing of the opening, and for allowing internal inspection when the vessel 10 is not in use, such as by a person climbing into the vessel through the opening/manhole.

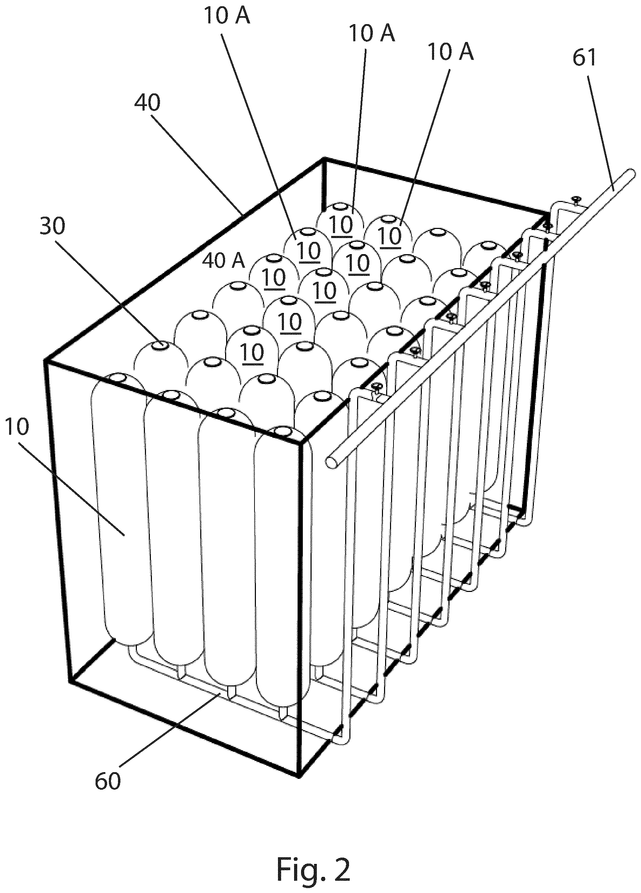

The pressure vessels can be arranged in a ship's hull in modules or compartments 40 - see Figure 2 - and can be interconnected for loading and offloading operations, such as via pipework 61 . In a preferred configuration, such modules or compartments 40 have four edges (are quadrilateral shaped) and contain a plurality of vessels 10. The number of vessels chosen will depend upon the vessel diameter or shape and the size of the modules or compartments 40. Further, the number of modules or compartments will depend upon the structural constraints of the ship hull for accommodating the modules or compartments 40. It is not essential for all the modules or compartments to be of the same size or shape, and likewise they need not contain the same size or shape of pressure vessel, or the same numbers thereof. The vessels 10 may be in a regular array within the modules or compartments - in the illustrated embodiment a 4x7 array. Other array sizes are also to be anticipated, whether in the same module (i.e. with differently sized pressure vessels), or in differently sized modules, and the arrangements can be chosen or designed to fit appropriately in the ship's hull.

For external inspection-ability reasons the distance between the vessels 10 within the modules or compartments will be at least 380mm, or more preferably at least 600 mm. These distances also allow space for vessel expansion when loaded with the pressurised gas - the vessels may expand by 2% or more in volume when loaded (and changes in the ambient temperature can also cause the vessel to change their volume).

Preferably the distance between the modules or compartments 40 or between the outer vessels 10A and the walls or boundaries 40A of the modules or compartments 40, or between adjacent outer vessels of neighbouring modules or compartments 40 (such as where no physical wall separates neighbouring modules or compartments 40) will be at least 600mm, or more preferably at least 1 meter, again for external inspection-ability reasons, and/or to allow for vessel expansion. Each pressure vessel row (or column) is interconnected with a piping system intended for loading and offloading operations from the bottom 12 of each vessel 10, such as through the preferably 12 inch (30cm) opening 7. The connection is to main headers, such as through motorized valves. The main headers can comprise various different pressure levels, for example three of them (high - e.g. 250 bar, medium - e.g. 150 bar and low - e.g. 90 bar), plus one blow down header and one nitrogen header for inert purposes.

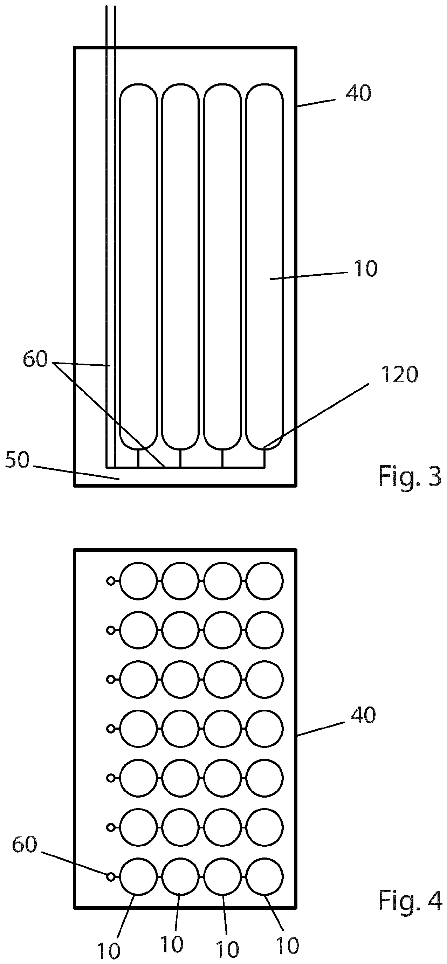

Also as shown in fig 4, the vessels 10 are preferred to be mounted vertically, preferably on dedicated supports or brackets, or by being strapped into place. The supports (not shown) hold the vessels 10 in order to avoid horizontal displacement of the vessels relative to one another. Clamps, brackets or other conventional pressure vessel retention systems, may be used for this purpose, such as hoops or straps that secure the main cylinder of each vessel.

The supports can be designed to accommodate vessel expansion, such as by having some resilience.

Vertically-mounted vessels can give less criticality in following dynamic loads due to a ship motion and/or can allow an easier possible replacement of single vessels in a module or compartment (they can be lifted out without the need to first remove other vessels from above) and/or a fast installation time. Mounting vessels in a vertical position can also allow possible condensed liquids to fall, under the influence of gravity, to the bottom of the vessels, thereby being off-loadable the vessels using, e.g., the 12 inch opening 7 at the bottom 12 of each vessel 10.

Offloading of the gas will advantageously be also from the bottom of the vessel 10.

With the majority of the piping and valving 60 being installed towards the bottom of the modules 40, the center of gravity of the whole arrangement will be also in a low position, which is recommended or preferred, especially for improving stability at sea, or during gas transportation.

Modules or compartments 40 are preferably kept in a controlled environment with nitrogen gas being between the vessels and the module walls 40A, thus helping to prevent fire occurrence. Alternatively, the engine exhaust gas could be used for this inerting function thanks to its composition being rich in C02.

Maximization of the size of the individual vessels 10, such as by making them, for example, up to 6 meter in diameter and up to 30 meter in length, for the same total volume contained allows a designer to reduce the total number of vessels, and it allows a reduction in the connection and inter-piping complexity, and hence the number of possible leakage points - they usually occur in weaker locations such as weldings, joints and manifolds. Preferred arrangements call for diameters of at least 2m.

One dedicated module can be set aside for liquid storage (such as condensate) using the same concept of interconnection used for the gas storage. The modules are thus potentially all connected together to allow a distribution of such liquid from other modules 40 to the dedicated module - a ship will typically feature multiple modules.

In and out gas storage piping may advantageously be linked with at least one of metering, heating, and/or blow down systems and scavenging systems through valve-connected manifolds. They may preferably be remotely activated by a Distributed Control System (DCS).

Piping diameters are preferably as follows:
18 inch (45,72 cm), for the three main headers (low, medium and high pressure) dedicated to CNG loading/offloading.
24 inch (60,96 cm), for the blow-down CNG line.
6 inch (15,24 cm), for the pipe feeding the module with the inert gas.
10 inch (25,40 cm), for the blow-down inert gas line.
10 inch (25,40 cm), for the pipe dedicated to possible liquid loading/offloading.
All modules are preferably equipped with adequate firefighting systems, as foreseen by international codes, standards and rules. The transported CNG will typically be at a pressure in excess of 60bar, and potentially in excess of 100bar, 150 bar, 200 bar or 250 bar, and potentially peaking at 300 bar or 350 bar.

### Embodiments

1. A corrosion-proof metallic liner made out of AISI 316 stainless steel with a tensile strength of at least 500 MPa and a carbon content below or equal to 0.08%, overwrapped by a structural composite carbon fiber-based with a tensile strength of 3,200 MPa or higher and a preferred Young Modulus of 230 GPa or higher, with advantageously 12,000, 24,000 or 48,000 filaments per yarn and a second external layer made out of non-reinforced epoxy resin with a tensile strength of at least 80 MPa and a thermal conductivity of about 0.2 W»m<"1>»K<"1> for insulating reasons.
2. A corrosion-proof metallic liner made out of AISI 316 stainless steel with a tensile strength of at least 500 MPa and a carbon content below or equal to 0.08%, overwrapped by a structural composite carbon fiber-based with a tensile strength of 3,200 MPa or higher and a preferred Young Modulus of 230 GPa or higher, with advantageously 12,000, 24,000 or 48,000 filaments per yarn and a second external glass fiber-based composite layer with an E-glass or S-glass fiber with an suggested tensile strength of 1 ,000 MPa or higher and a suggested Young Modulus of 70 GPa or higher impregnated with an epoxy resin with a thermal conductivity of about 0.2 W»m<"1 >»K<"1 > for insulating reasons.
3. A corrosion-proof metallic liner, overwrapped by a structural composite carbon fiber-based with a tensile strength of 3,200 MPa or higher and a preferred Young Modulus of 230 GPa or higher, with advantageously 12,000, 24,000 or 48,000 filaments per yarn and a second external glass fiber-based composite layer with an E-glass or S-glass fiber with an suggested tensile strength of 1 ,000 MPa or higher and a suggested Young Modulus of 70 GPa or higher impregnated with an epoxy resin with a thermal conductivity of about 0.2 W»m<"1 >»K<"1 > for insulating reasons plus a third external layer made out of non- reinforced epoxy resin with a tensile strength of at least 80 MPa and a thermal conductivity of about 0.2 W»nT<1>»K<~1> for insulating reasons. This also allows the vessel to have a higher thermal stability, giving the transported gas a lower temperature gradient.

The pressure vessels described herein can carry a variety of gases, such as raw gas straight from a bore well, including raw natural gas, e.g. when compressed - raw CNG or RCNG, or H2, or C02 or processed natural gas (methane), or raw or part processed natural gas, e.g. with C02 allowances of up to 14% molar, H2S allowances of up to 1 ,000 ppm, or H2 and C02 gas impurities, or other impurities or corrosive species. The preferred use, however, is CNG transportation, be that raw CNG, part processed CNG or clean CNG - processed to a standard deliverable to the end user, e.g. commercial, industrial or residential.

CNG can include various potential component parts in a variable mixture of ratios, some in their gas phase and others in a liquid phase, or a mix of both. Those component parts will typically comprise one or more of the following compounds: C2H6, C3H8, C4H10, C5H12, C6H14, C7H16, C8H18, C9+ hydrocarbons, C02 and H2S, plus potentially toluene, diesel and octane in a liquid state, and other impurities/species.

## Claims

1. A pressure vessel (10) standing vertically in use, in particular for compressed natural gas containment or transport, with a generally cylindrical shape over a majority of its length and at least, an opening (7) for gas loading and offloading and for liquid evacuation, the pressure vessel comprising:
a non-structural metallic liner (1);
a first, structural support fiber layer (2) external and adjacent to the metallic liner fully wrapping the vessel, including most of the vessel ends, and
a second, non-structural fiber layer (3) external and adjacent to the first fiber layer, wherein the first and second layers are made of different materials;
wherein structural support is provided, during pressurized transportation of gas, by the first fiber layer (2), **characterized by**:
the pressure vessel further comprising a manhole (6) for internal inspection of the vessel, being provided at a top with closing means for allowing sealed closing of the manhole (6), and said opening (7) at a bottom, of the pressure vessel when the pressure vessel stands vertically, and said opening being provided with a cap or connector.

2. The pressure vessel according to claim 1, wherein the metallic liner (1) is gas impermeable and corrosion resistant, wherein the metallic liner is optionally selected from the group comprising steel, stainless steel, nickel-based alloys, bi-phase steel, aluminum, titanium, titanium alloys.

3. The pressure vessel of claim 1 or 2, wherein the second layer (3) is a polymer or a fiber-reinforced polymer based on glass fibers such that the second layer (3) is inert in marine environments providing low thermal conductivity.

4. The pressure vessel according to any claim 1, 2 or 3, wherein each of the layers is made of fibers wound about the metallic liner, wherein the first fiber layer (2) optionally comprises carbon fibers, wherein the second fiber layer (3) optionally comprises glass fibers.

5. The pressure vessel (10) according to any of the preceding claims, wherein the inner diameter is between 0.5 meters and 5 meters, preferably wherein the inner diameter is between 1.5 and 3.5 meters.

6. A module or compartment (40) comprising a plurality of inspectable pressure vessels (10) according to any one of the preceding claims, the pressure vessels being arranged in a ship's hull and vertically standing within said module or compartment, and being interconnected for loading and offloading operations.

7. The module of claim 6, wherein the pressure vessels have different heights for accommodating a variable floor condition.

8. The module of claim 6 or 7, wherein a distance between any of the pressure vessels is at least 380mm, preferably at least 600mm.

9. The module of claim 6, 7 or 8, further comprising piping, valves (60), wherein said piping and valves are installed towards a bottom of the module (40).

10. A method of storing or transporting gas onshore or offshore, in particular compressed natural gas, using at least one pressure vessel (10) according to any one of claims 1 to 5, or a module or compartment (40) according to any one of claims 6 to 9.

11. A vehicle for transporting gas, in particular compressed natural gas, comprising at least one pressure vessel (10) according to any one of claims 1 to 5, or a module or compartment (40) according to any one of claims 6 to 9, wherein said vehicle is a ship.

12. A vehicle according to claim 11, wherein said vehicle comprises two or more of said modules or compartments (40), wherein a distance between an outer vessel in a compartment and a wall (40A) of the compartment if the compartments are walled, or a distance between an outer vessel in a compartment and an outer vessel in a neighboring compartment if the compartments are not walled, is at least 600mm.

## Patentansprüche

1. Druckbehälter (10), der in der Verwendung vertikal steht, insbesondere zur Aufnahme oder zum Transport von komprimiertem Erdgas, mit einer generell zylindrischen Form über den Großteil seiner Länge und mindestens einer Öffnung (7) zum Beladen und Entladen von Gas und zum Ablassen von Flüssigkeit, der Druckbehälter umfassend:
eine nicht-strukturelle metallische Auskleidung (1);
eine erste, strukturelle Tragfaserschicht (2) außerhalb und anliegend an der metallische Auskleidung, die den Behälter vollständig umhüllt, einschließlich der meisten Behälterenden, und
eine zweite, nicht-strukturelle Faserschicht (3) außerhalb und anliegend an der ersten Faserschicht, wobei die erste und die zweite Schicht aus verschiedenen Materialien hergestellt sind;
wobei eine strukturelle Unterstützung während eines Gastransports unter Druck durch die erste Faserschicht (2) bereitgestellt wird, **gekennzeichnet durch**:
dass der Druckbehälter ferner ein Mannloch (6) zur internen Inspektion des Behälters umfasst, das an einer Oberseite mit Verschlussmitteln versehen ist, um ein dichtes Verschließen des Mannlochs (6) und der Öffnung (7) an einem Boden des Druckbehälters zu ermöglichen, wenn der Druckbehälter vertikal steht, und wobei die Öffnung mit einer Kappe oder einem Verbinder versehen ist.

2. Druckbehälter nach Anspruch 1, wobei die metallische Auskleidung (1) gasundurchlässig und korrosionsbeständig ist, wobei die metallische Auskleidung optional ausgewählt ist aus der Gruppe, die Stahl, Edelstahl, nickelbasierte Legierungen, Dualphasenstahl, Aluminium, Titan, Titanlegierungen umfasst.

3. Druckbehälter nach Anspruch 1 oder 2, wobei die zweite Schicht (3) ein Polymer oder ein faserverstärktes Polymer basierend auf Glasfasern ist, sodass die zweite Schicht (3) in Meeresumgebungen inert ist und eine niedrige Wärmeleitfähigkeit bereitstellt.

4. Druckbehälter nach einem der Ansprüche 1, 2 oder 3, wobei jede der Schichten aus Fasern hergestellt ist, die um die metallische Auskleidung gewickelt sind, wobei die erste Faserschicht (2) gegebenenfalls Kohlenstofffasern umfasst, wobei die zweite Faserschicht (3) optional Glasfasern umfasst.

5. Druckbehälter (10) nach einem der vorherigen Ansprüche, wobei der Innendurchmesser zwischen 0,5 Meter und 5 Meter ist, vorzugsweise wobei der Innendurchmesser zwischen 1,5 und 3,5 Meter ist.

6. Modul oder Druckraum (40) umfassend eine Vielzahl von inspizierbaren Druckbehältern (10) nach einem der vorherigen Ansprüche, wobei die Druckbehälter in einem Rumpf eines Schiffs angeordnet sind und vertikal innerhalb des Moduls oder Druckraums stehen und für Belade- und Entladevorgänge miteinander verbunden sind.

7. Modul nach Anspruch 6, wobei die Druckbehälter verschiedene Höhen aufweisen, um sich an eine variable Bodenbeschaffenheit anzupassen.

8. Modul nach Anspruch 6 oder 7, wobei ein Abstand zwischen beliebigen der Druckbehälter mindestens 380 mm, vorzugsweise mindestens 600 mm, ist.

9. Modul nach Anspruch 6, 7 oder 8, ferner umfassend Rohrleitungen und Ventile (60), wobei die Rohrleitungen und Ventile in Richtung zu einem Boden des Moduls (40) installiert sind.

10. Verfahren zum Speichern oder Transportieren von Gas an Land oder ablandig, insbesondere von komprimiertem Erdgas, unter Verwendung mindestens eines Druckbehälters (10) nach einem der Ansprüche 1 bis 5 oder eines Moduls oder eines Druckraums (40) nach einem der Ansprüche 6 bis 9.

11. Fahrzeug zum Transportieren von Gas, insbesondere von komprimiertem Erdgas, umfassend mindestens einen Druckbehälter (10) nach einem der Ansprüche 1 bis 5 oder ein Modul oder einen Druckraum (40) nach einem der Ansprüche 6 bis 9, wobei das Fahrzeug ein Schiff ist.

12. Fahrzeug nach Anspruch 11, wobei das Fahrzeug zwei oder mehrere der Module oder Druckräume (40) umfasst, wobei ein Abstand zwischen einem äußeren Behälter in einem Druckraum und einer Wand (40A) des Druckraums, wenn die Druckräume mit einer Wand versehen sind, oder ein Abstand zwischen einem äußeren Behälter in einem Druckraum und einem äußeren Behälter in einem benachbarten Druckraum, wenn die Druckräume nicht mit einer Wand versehen sind, mindestens 600 mm ist.

## Revendications

1. Récipient sous pression (10) reposant verticalement lors de l'utilisation, en particulier pour le confinement ou le transport de gaz naturel comprimé, avec une forme généralement cylindrique sur la majorité de sa longueur et au moins, une ouverture (7) pour le chargement et le déchargement de gaz et pour l'évacuation de liquide , le récipient sous pression comprenant :
un revêtement métallique non structurel (1) ;
une première couche de fibres de support structurel (2) externe et adjacente au revêtement métallique enveloppant complètement le récipient, comprenant la plupart des extrémités de récipient, et
une seconde couche de fibres non structurelle (3) externe et adjacente à la première couche de fibres, lesdites première et seconde couches étant constituées de matériaux différents ;
ledit support structurel étant assuré, durant le transport sous pression du gaz, par la première couche de fibres (2), **caractérisé par** :
le récipient sous pression comprenant en outre un regard (6) en vue de l'inspection interne du récipient, étant doté au niveau de la partie supérieure d'un moyen de fermeture destiné à permettre une fermeture étanche du regard (6), et ladite ouverture (7) au niveau d'une partie inférieure, du récipient sous pression lorsque le récipient sous pression repose verticalement, et ladite ouverture étant dotée d'un capuchon ou d'un raccord.

2. Récipient sous pression selon la revendication 1, ledit revêtement métallique (1) étant imperméable aux gaz et résistant à la corrosion, ledit revêtement métallique étant éventuellement choisi dans le groupe comprenant l'acier, l'acier inoxydable, les alliages à base de nickel, l'acier biphasé, l'aluminium, titane, les alliages de titane.

3. Récipient sous pression selon la revendication 1 ou 2, ladite seconde couche (3) étant un polymère ou un polymère renforcé de fibres à base de fibres de verre de sorte que la seconde couche (3) soit inerte dans des environnements marins offrant une faible conductivité thermique.

4. Récipient sous pression selon l'une quelconque des revendications 1, 2 ou 3, chacune des couches étant constituée de fibres enroulées autour du revêtement métallique, ladite première couche de fibres (2) comprenant éventuellement des fibres de carbone, ladite seconde couche de fibres (3) comprenant éventuellement des fibres de verre.

5. Récipient sous pression (10) selon l'une quelconque des revendications précédentes,
ledit diamètre interne étant compris entre 0,5 mètre et 5 mètres, de préférence ledit diamètre interne étant compris entre 1,5 et 3,5 mètres.

6. Module ou compartiment (40) comprenant une pluralité de récipients sous pression (10) pouvant être inspectés selon l'une quelconque des revendications précédentes, les récipients sous pression étant agencés dans la coque d'un navire et reposant verticalement à l'intérieur dudit module ou compartiment, et étant reliés pour les opérations de chargement et de déchargement.

7. Module selon la revendication 6, lesdits récipients sous pression possédant des hauteurs différentes pour s'adapter à un état de plancher variable.

8. Module selon la revendication 6 ou 7, une distance entre n'importe quels des récipients sous pression étant supérieure ou égale à 380 mm, de préférence supérieure ou égale à 600 mm.

9. Module selon la revendication 6, 7 ou 8, comprenant en outre des tuyaux, des soupapes (60), lesdits tuyaux et soupapes étant installés vers la partie inférieure du module (40).

10. Procédé de stockage ou de transport de gaz à terre ou en mer, en particulier de gaz naturel comprimé, à l'aide d'au moins un récipient sous pression (10) selon l'une quelconque des revendications 1 à 5, ou d'un module ou compartiment (40) selon l'une quelconque des revendications 6 à 9.

11. Véhicule destiné au transport de gaz, en particulier de gaz naturel comprimé, comprenant au moins un récipient sous pression (10) selon l'une quelconque des revendications 1 à 5, ou un module ou compartiment (40) selon l'une quelconque des revendications 6 à 9, ledit véhicule étant un navire.

12. Véhicule selon la revendication 11, ledit véhicule comprenant deux, ou plus, desdits modules ou compartiments (40), une distance entre un récipient externe dans un compartiment et une paroi (40A) du compartiment, si les compartiments présentent des parois, ou une distance entre un récipient externe dans un compartiment et un récipient externe dans un compartiment voisin, si les compartiments ne présentent pas de parois, étant supérieure ou égale à 600 mm.
